# EUROPÄISCHE PATENTANMELDUNG

(11) **EP 0 841 734 A1**
(43) Veröffentlichungstag der Anmeldung: **13.05.1998**
(21) Anmeldenummer: 97117865.2
(22) Anmeldetag: 15.10.1997
(51) Int. Cl.: H02G 15/117, H02G 15/076, G02B 6/44

(54) **Bausatz zur Erzeugung einer Muffe für Verteilernetze der Telekommunikation od- dgl.**

(30) Priorität: 07.11.1996 DE 19645846
(71) Anmelder: PSI Products GmbH, 58300 Wetter (DE)
(72) Erfinder: Fremgen, Dieter, 42489 Wülfrath (DE); Adamaszek, Dieter, 59174 Kamen (DE)
(74) Vertreter: Patentanwälte Meinke, Dabringhaus und Partner

(57) **Zusammenfassung**

Mit einem Bausatz (1) zur Erzeugung einer Muffe für die Verteilernetze der Telekommunikation od. dgl. mit einem Ein- und/oder Auslaufbereich (3) für Kabel, einem zylindrischen Mantelbereich (2) zur Aufnahme der Kabelanschlüsse, -verzweiger, -spleiße od. dgl. und einem Topfboden (4) und/oder Auslauf- bzw. Einlaufbereich (3a), sollen Muffen unterschiedlicher Anwendungsart erzeugt werden bei beliebiger Verwertbarkeit, d.h., die eingesetzten Elemente sollen insbesondere wenigstens im größten Umfange wiederverwertbar sein, auch wenn die Muffe geöffnet und später wieder geschlossen werden muß.

Dies wird dadurch erreicht, daß der zylindrische Mantelbereich (2) von einem im Innenraum glatten, zylindrischen Rohrstück, insbesondere aus Kunststoff, mit Befestigungselementen (5) zur lösbaren Verbindung des Ein- bzw. Auslaufbereiches (3) oder des Topfbodens (4) gebildet ist, wobei Ein-/Auslaufbereiche (3) mit Einsteckstutzen (10) für nach außen weisende, vormontierbare Kabeleinlaufstutzen (11) versehen sind.

## Beschreibung

Die Erfindung richtet sich auf einen Bausatz zur Erzeugung einer Muffe für die Verteilernetze der Telekommunikation od. dgl. mit einem Ein- und/oder Auslaufbereich für Kabel, einem zylindrischen Mantelbereich zur Aufnahme der Kabelanschlüsse, -verzweiger, -spleiße od. dgl. und einem Topfboden und/oder Auslauf- bzw. Einlaufbereich.

Insbesondere in den Telekommunikationsnetzen werden sogenannte Kabelmuffen eingesetzt, die dazu benutzt werden, Topfmuffen, Durchgangsmuffen, Abzweigmuffen od. dgl. in entsprechenden Netzen zu erzeugen, wobei es für die vorliegende Erfindung unerheblich ist, ob es sich um eine klassische Kupferkabelanwendung, eine Glasfaserkabelanwendung, um Koaxialkabelanwendung oder um gemischte Anwendungen handelt. Auch ist es für die vorliegende Erfindung gleichgültig, ob es sich um sogenannte Luftmuffen als Pol- oder Tragseilmuffen handelt oder ob die Kabel im Erdreich oder in Kabelschächten verlegt werden. Die vorliegende Erfindung deckt die gesamte Bandbreite dieser Anwendungsbereiche ab.

Bisher gibt es eine Reihe von Muffengestaltungen, wie beispielsweise eine Muffe nach der DE-A-19 58 155, die eine sogenannte Durchlaufmuffe zeigt mit sich außen am Kabelmantel anlegenden Dichtlamellen. Eine solche Muffe ist beispielsweise nicht mit Innendruck beaufschlagbar, da die Lamellen sich dann vom Kabelmantel abheben. Eine sogenannte Topfmuffe für Glasfaserkabel zeigt die DE-C-43 42 000 mit einem vergleichsweise aufwendig gestalteten Kabeleinlaufbereich, wobei die Zugentlastung offensichtlich nur über den Dichtkörper erfolgt.

Eine weit verbreitete Muffengestaltung ist die sogenannte Schrumpfmuffe. Einen teilweise schrumpfbaren Muffenkörper zeigt beispielsweise die DE-A-36 16 535. Bei Schrumpfmuffen werden z.B. nach Erzeugung eines Kabelspleißes um den Spleißbereich neben Abdichtungsmitteln und weiteren Gestaltungen an den Kabelein- und -ausgängen Schrumpfmanschetten gelegt, die unter Wärmeanwendung aufgeschrumpft werden. Auch ist es bekannt, Rohrstücke aus schrumpfbarem Material überzuschieben und diese Rohrstücke dann aufzuschrumpfen, wobei die entsprechenden Elemente in der Regel auf der Innenseite mit einer Heißschmelzkleberbeschichtung versehen sind, um einen möglichst dichten Übergang zu den Kabelmänteln zu erzeugen.

Es sind auch Schraubmuffen bekannt. Hier werden die Kabelein- und -ausgangsstutzen mit rohrschellenähnlichen Elementen am Muffenkörper befestigt.

Abdichtungsmöglichkeiten anderer Art sind beispielsweise O-Ringdichtungen, sogenannte Gel-Dichtungen im Kabeleinlaufbereich oder Dichtungen mittels Gießharz. Auch sind Kleberkreuze, Thermoplaste im Zwickelbereich oder ähnliche Dichtmöglichkeiten bei Schrumpfschläuchen bekannt.

Ein praktisch allen bekannten Lösungen gemeinsamer, erheblicher Nachteil besteht darin, daß wesentliche Teile der Muffen bei einer Demontage nicht mehr wiederverwendbar sind. Bei Schrumpfmuffen müssen in der Regel die gesamten Muffen neu erzeugt werden. Alle Elemente der alten Muffen sind nicht mehr verwendbar. Auch lassen sich viele Lösungen nicht unabhängig davon einsetzen, ob es sich beispielsweise um Luftmuffen oder Erdreichmuffen handelt. Hier ist man häufig zu einer erheblichen Lagerhaltung gezwungen, um den unterschiedlichen Anforderungen gerecht zu werden. Dies gilt auch für die an die unterschiedlichen Kabel angepaßten Muffentechnologien.

Aufgabe der Erfindung ist die Schaffung einer Lösung, mit der mit einem Bausatz Muffen unterschiedlicher Anwendungsart erzeugbar sind bei beliebiger Verwertbarkeit, d.h., die eingesetzten Elemente sollen wenigstens im größten Umfange wiederverwertbar sein, auch wenn die Muffe geöffnet und später wieder geschlossen werden muß, wobei eine Vielzahl von Kabeln in die Muffe einführbar sein soll mit einfachster Montage, einfacher Dichtung und optimaler Zugentlastung.

Mit einem Bausatz der eingangs bezeichneten Art, wird diese Aufgabe gemäß der Erfindung durch die kennzeichnenden Merkmale des Anspruches 1 gelöst.

Durch die Ausbildung des zylindrischen Mantelbereiches als innen glattes Rohrstück kann in diesen, praktisch den Muffenkörper bildenden Mittelteil der Muffe jegliche Art von Einbauten vorgenommen werden. Auch ist es möglich, die abschließenden Bereiche wenigstens teilweise zu übergreifen oder aber bei der Zusammenstellung der Muffe zu überfahren, da innen Hindernisse nicht vorgesehen sind.

Durch die besondere Gestaltung der Einlaufbereiche können auf kleinstem Raum eine Vielzahl von Kabeln in die Muffe eingeführt werden, was bei der bekannten Schrumpftechnik schon deshalb nicht möglich ist, weil bei Einschrumpfen eines Kabels in einen Bereich sich der sehr naheliegende benachbarte Kabeleinlaufbereich wieder durch Aufschmelzen lösen würde. Auch andere Verbindungstechniken können nicht optimal eingesetzt werden, da ein zu geringer Arbeitsraum bestünde, wenn eine Vielzahl von Kabeln in die Muffe einlaufen.

Durch die Erfindung wird eine Vormontage am Kabel möglich, der Einlaufbereich kann fertig am Kabelmantel fixiert werden, das vorpräparierte Kabel wird in den Ein- bzw. Auslaufbereich eingeschoben, fixiert sich dort von selbst, weitere Arbeiten sind nicht mehr möglich, um einen dichten Kabeleinlauf mit Zugentlastung zu erreichen.

Weitere Ausgestaltungen der Erfindung ergeben sich aus den Unteransprüchen. So kann vorgesehen sein, daß die Ein-/Auslaufbereiche bzw. der Topfboden mit in das Innere des Kunststoffrohrstückes weisenden Dichtansätzen, insbesondere mit Dicht-O-Ringen, und mit Ansätzen für die Befestigungselemente am Kunststoffrohrstück versehen sind.

Zweckmäßig sind die Ein-/Auslaufbereiche mit nach außen weisenden Kabeleinlaufstutzen versehen, wie dies die Erfindung ebenfalls vorsieht, wobei derartige Kabeleingänge in Stutzenform für sich gesehen auch bei Muffen der oben beschriebenen Schrumpftechnik bekannt sind.

In besonderer Ausgestaltung sieht die Erfindung vor, daß die Kabeleinlaufstutzen auswechselbar an den Ein- bzw. Auslaufbereichen befestigt sind, wodurch sich erreichen läßt, in eine vom Aufbau her gleiche, beispielsweise den Kabeleinlauf bildende Kabelplatte, Kabeleinlaufstutzen für Kabel unterschiedlicher Durchmesser, für Doppelkabel, Vierfachkabel od. dgl. zu fixieren, ohne den Grundaufbau dieser Kabelplatte ändern zu müssen, was, wie oben schon angegeben, die Lagerhaltung deutlich vereinfacht, da die zur Verfügung zu haltenden Bausatzelemente in ihrer Anzahl stark verringerbar sind.

Die Kabeleinlaufstutzen können, wie dies die Erfindung ebenfalls vorsieht, in ihrem Inneren mit Kabeldichtungen versehen sein. Auch hier sind unterschiedliche Gestaltungen möglich. Die Kabeldichtungen können gleichzeitig als Zugentlastungsmittel ausgebildet sein oder mit diesen kombiniert sein.

Zweckmäßig können die Kabeleinlaufstutzen mit geschlossenen, kegelstumpfförmigen, nach außen weisenden Dichtstutzen versehen sein, die in der Einlauflage des Kabels in einem dem jeweiligen Außendurchmesser des Kabels angepaßten Bereich abtrennbar sind.

So können die Kabeleinlaufstutzen eine treppenartige Kegelstumpfkonfiguration aufweisen, derart, daß der Monteur entsprechend dem jeweiligen Kabeldurchmesser des einlaufenden Kabels eine Abtrennung des Kegelstumpfes am gewünschten Durchmesser vornehmen kann. Dabei kann erfindungsgemäß die Konfiguration so getroffen sein, daß die Kabeleinlaufkegel aus einem aufweitbaren und in seine Ursprungslage zurückkehrenden Kunststoff gebildet sind.

So ist es möglich, beispielsweise den Kabeleinlaufdurchmesser für das einzuführende Kabel am Kegelstumpf geringfügig kleiner zu wählen als der Außendurchmesser des einzuführenden Kabels, den Kegelstumpf dann aufzuweiten, das Kabel einzuführen, wobei sich nach einer gewissen zeitlichen Verzögerung der Kegelstumpf zusammenzieht und außen dichtend auf den Kabelmantel auflegt, ohne daß es weiterer Dichtelemente bedarf.

Zweckmäßig sind die Kabeleinlaufstutzen über Schnapphaken mit den Einlaufbereichen verrastbar, wodurch sie nicht nur sehr einfach zu montieren, sondern in gleicher Weise auch sehr einfach zu demontieren sind bzw. gegen andere Einlaufstutzen auswechselbar sind.

Der Bausatz kann erfindungsgemäß auch mit Schnellverschlüssen zur Befestigung der Ein- und Auslaufbereiche bzw. der Kabelplatten versehen sein, wozu die Erfindung in Ausgestaltung vorsieht, daß die Befestigungselemente am glatten Kunststoffrohrstück als Außenringe am Ein- und Auslaufbereich bzw. Topfboden übergreifende, federnde Schnapphaken ausgebildet sind.

Die Schnapphaken der Befestigungselemente sind dabei über axial verschiebbare Gleitstücke in die Verrastlage und über einstückig angeformte Federlaschen in die Endrastlage verschwenkbar, so daß zum Entsperren die Gleitstücke lediglich aus der Verrastposition in die Öffnungsposition verschiebbar sind, so daß sich die Schnapphaken automatisch über die angeformten Federlaschen von den Außenringen lösen.

Um eine optimale Wiederverwendung auch dann zu gewährleisten, wenn die Muffe zwar geöffnet, die Kabel aber nicht vollständig ausgewechselt werden müssen, sieht die Erfindung auch vor, daß wenigstens die Kabeleinlaufkegel axial geteilt ausgebildet sind. Mit dieser für sich gesehen bekannten axialen Teilung der Kabeleinlaufkegel ist es möglich, in den Muffen verbleibende Kabel wieder dichtend mit den Ein- bzw. Auslaufbereichen bzw. den Kabelplatten zu verbinden.

Nach der Erfindung kann auch vorgesehen sein, die Ein- bzw. Auslaufbereiche, d.h. die Kabelplatten, mit Aufnahmeelementen zur Belegung mit einer Verbindungsschiene zu versehen, die beispielsweise zur Erdung der Muffe herangezogen werden kann.

Die Ein- und Auslaufbereiche können mit Einrichtungen zur Aufnahme von Glasfaserkassetten versehen sein, diese können mit einem Aufnahmedorn zur steckbaren oder drehbaren Befestigung einer Mast- bzw. Wandhalterung versehen sein u. dgl. mehr.

Um den unterschiedlichen Einsatzgebieten gerecht werden zu können, sieht die Erfindung in Ausgestaltung auch vor, daß das den Muffenkörper bildende Kunststoffrohrstück, die die Ein- bzw. Auslaufbereiche bildenden Kabelplatten sowie die Kabeleinlaufkegel aus gleichen oder unterschiedlichen Kunststoffmaterialien und/oder aus Mischwerkstoffen gebildet sind. So kann z.B. ein Kabelanschlußelement in Zwei-Komponenten-Spritztechnik hergestellt sein, d.h. der mit der Kabelplatte zusammenwirkende Teil aus einem festen Thermoplast hergestellt sein, während beispielsweise der kegelstumpf- oder pyramidenstumpfförmige Kabeleinführbereich aus einem Elastomer mit einstellbarer Shore-Härte hergestellt sein kann.

Weitere Einzelheiten, Merkmale und Vorteile der Erfindung ergeben sich aufgrund der nachfolgenden Beschreibung sowie anhand der Zeichnung. Diese zeigt in den
- Fig. 1 bis 5: in räumlicher Explosionsdarstellung unterschiedliche Muffenkonfigurationen mit unterschiedlichen Ein- und Auslaufbereichen bzw. Topfböden,
- Fig. 6: einen Schnellverschlußhaken in Seitenansicht in Öffnungsstellung (linke Figurenhälfte) und Schließstellung (rechte Figurenhälfte),
- Fig. 7 bis 9: eine Topfmuffe in unterschiedlichen räumlichen Darstellungen bzw. in Explosionsdarstellung mit Varianten von Kabeleinlaufbereichen,
- Fig. 10: in räumlicher Darstellung eine Durchgangsmuffe,
- Fig. 11 und 12: eine Ansicht auf einen Einlaufbereich mit unterschiedlicher Einlaufgestaltung für ein Einzel- bzw. ein Doppelkabel,
- Fig. 13: eine räumliche Darstellung nach einer anderen Variante einer Durchgangsmuffe,
- Fig. 14: eine Ansicht des entsprechenden Ein- bzw. Auslaufbereiches,
- Fig. 15: in Schnitt- und Explosionsdarstellung den Einlaufbereich für zwei Kabel,
- Fig. 16: einen Schnitt gemäß Linie A-A in Fig. 15,
- Fig. 17: in räumlicher Explosionsdarstellung die Elemente des entsprechenden Kabeleinlaufbereiches ohne Kabel,
- Fig. 18 bis 21: den Kabeleinlaufbereich in Zusammenstelldarstellung etwa gemäß Fig. 15 mit Varianten von einlaufenden Kabeln unterschiedlicher Durchmesser,
- Fig. 22 bis 24: in räumlicher, teilweise explosionsartiger Darstellung eine Abzweigmuffe mit angedeuteter Kabelschleife an einem Einlaufbereich der Muffe,
- Fig. 25 bis 28: in räumlicher, teilweise explosionsartiger Darstellung das Anbringen einer Kabelschleife an einen Einlaufbereich in seinen unterschiedlichen Montagephasen,
- Fig. 29 und 30: in geschlossener Darstellung und Explosionsdarstellung die Topfmuffe mit einer Glasfaserkassette sowie in den
- Fig. 31 und 32: eine Variante der Kabel-Zugabfangung im Schnitt bzw. in räumlicher Darstellung, teilweise geschnitten.

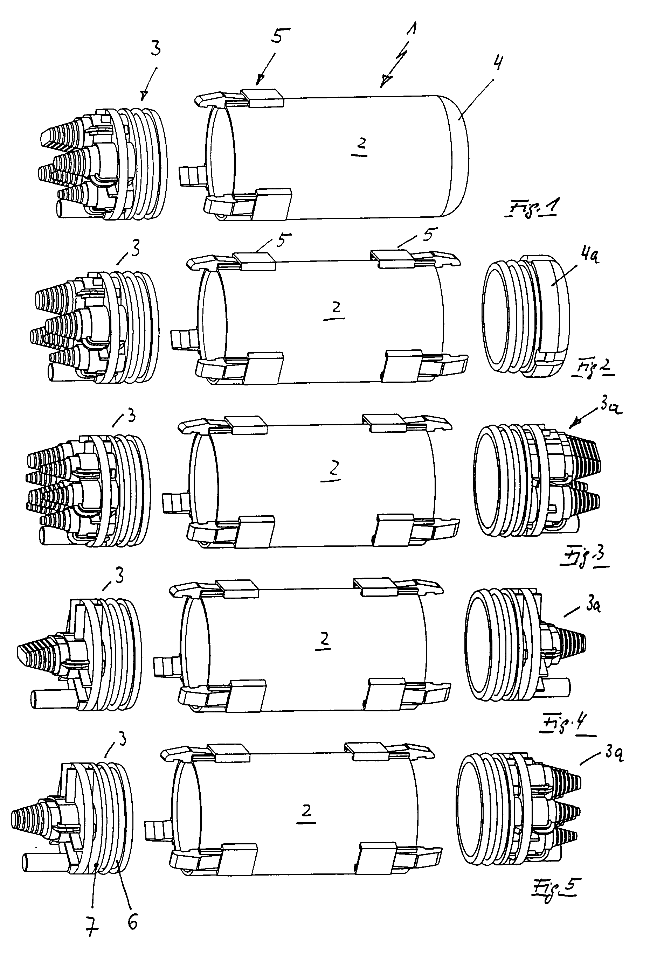

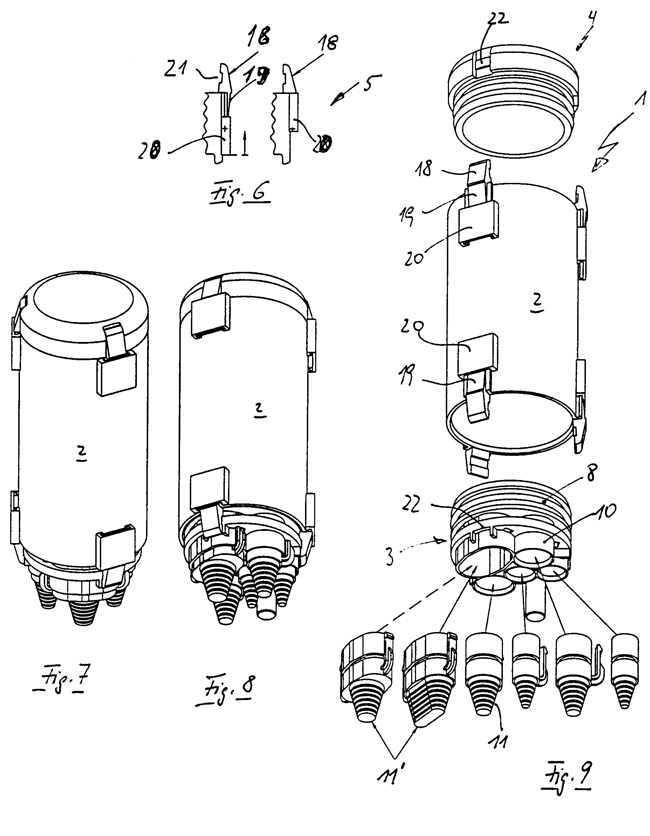

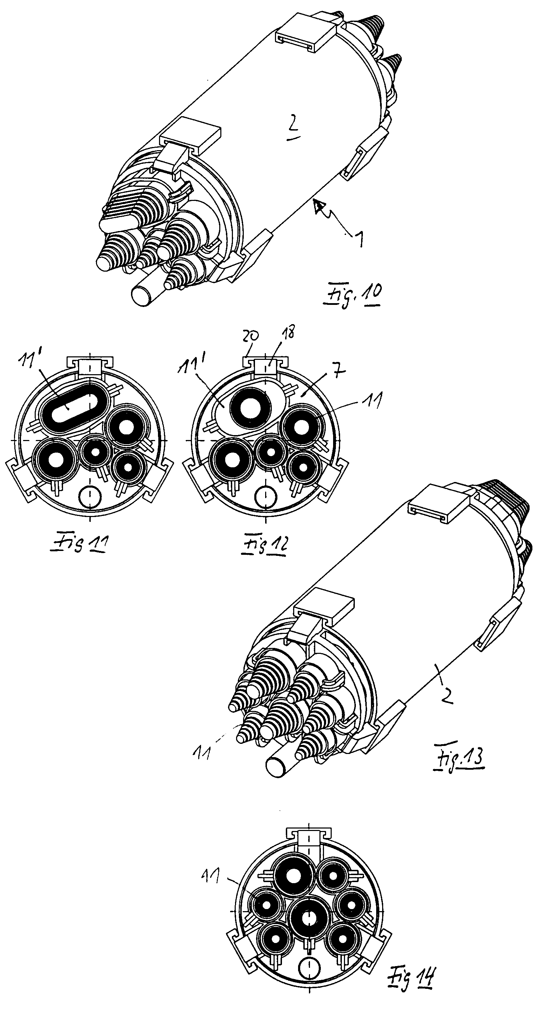

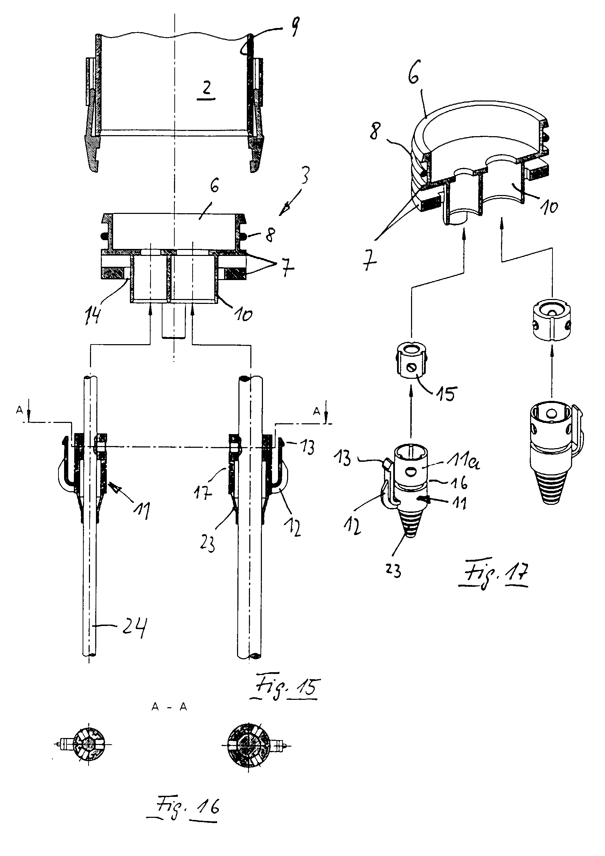

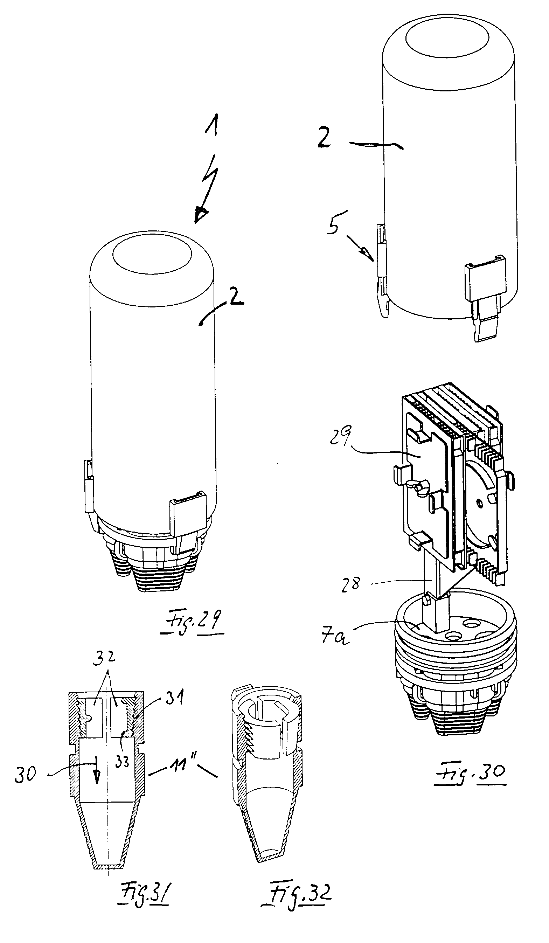

In den Fig. 1 bis 5 ist ein Muffenbausatz nach der Erfindung, allgemein mit 1 bezeichnet, mit unterschiedlichen Gestaltungen, insbesondere der Ein- und Auslaufbereiche der Kabel dargestellt. Das jeweils mittlere Element eines solchen Bausatzes besteht nach der Erfindung aus einem zylindrischen Mantelbereich 2, der von einem innen glatten Rohrstück gebildet wird, welches beidseitig einen allgemein mit 3 bezeichneten Ein- bzw. Auslaufbereich und einen mit 4 bezeichneten Topfboden bzw. wiederum einen Kabelein- bzw. -auslaufbereich aufweist, letztere sind in den Fig. 3 bis 5 mit 3a bezeichnet.

In Fig. 1 ist der Topfboden 4 dauerhaft mit dem zylindrischen Mantelbereich 2 verbunden, während der Ein- bzw. Auslaufbereich 3 über allgemein mit 5 bezeichnete Schnellverschlüsse lösbar mit dem Mantelbereich 2 verbunden ist.

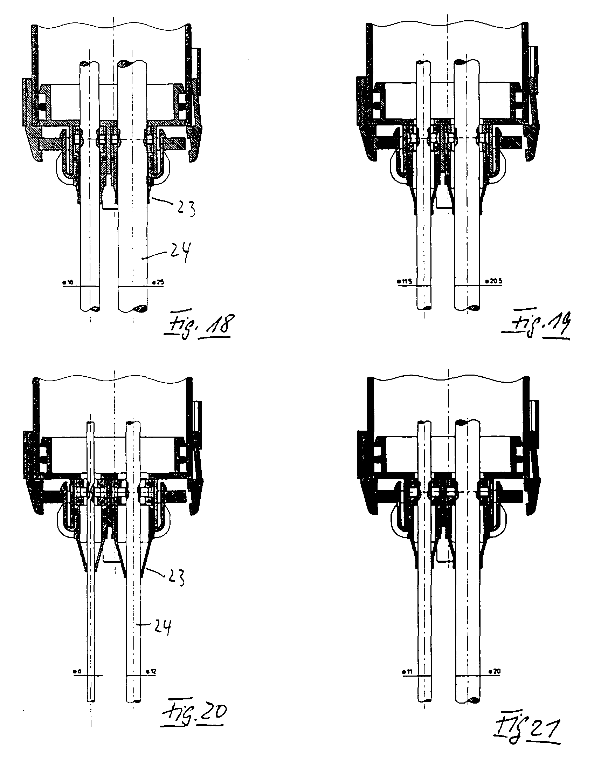

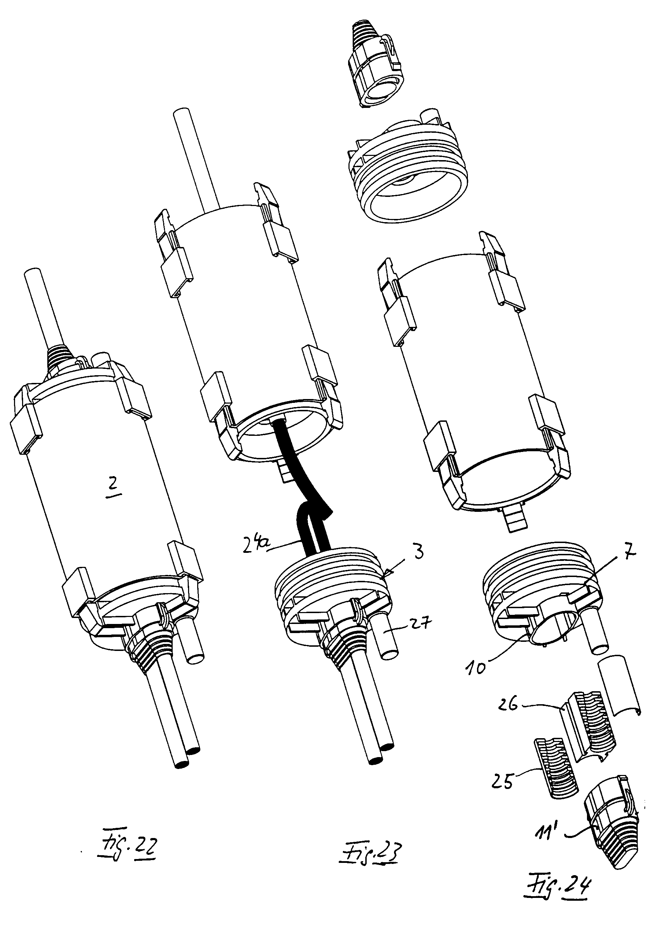

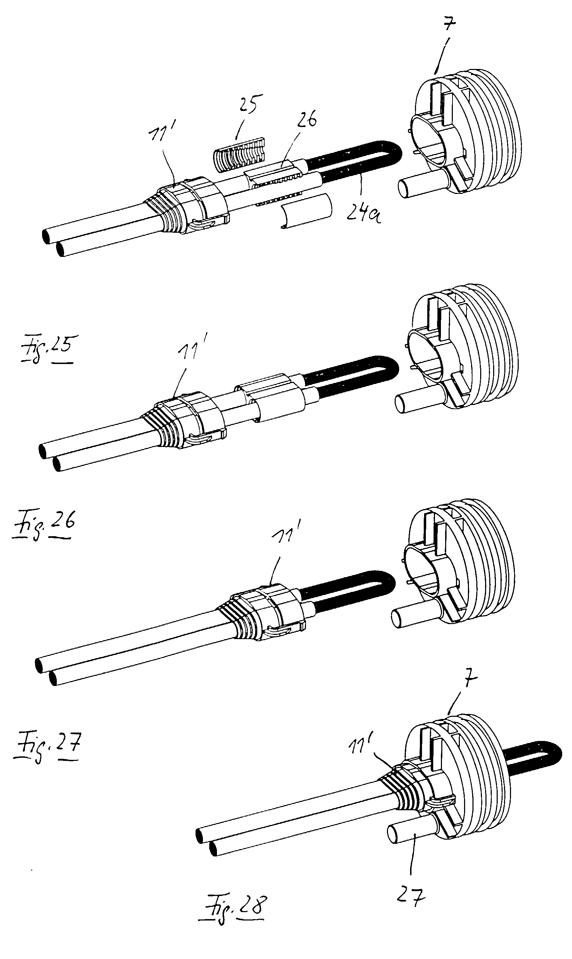

In Fig. 2 ist dargestellt, daß ein Topfboden 4a auch über weitere Schnellverschlüsse mit dem Mantelbereich 2 verbindbar ist. In diesem Falle weist der Mantelbereich 2 beidseitig entsprechende Schnellverschlüsse 5, deren Funktion weiter unten näher beschrieben wird, auf.

Soweit lösbare Ein- bzw. Auslaufbereiche 3 bzw. 3a oder Topfböden 4a eingesetzt werden, weisen diese im Prinzip jeweils einen vergleichbaren Aufbau auf. Ein solcher Ein- bzw. Auslaufbereich ist, wie sich beispielsweise aus Fig. 5 auch in Verbindung mit den Fig. 15 und 17 ergibt, mit einem Dichtansatz 6 an einer Kabelplatte 7 versehen, der außen mit einem O-Dichtring 8 zur Abdichtung gegenüber der glatten Innenfläche 9 des Kunststoffrohrstückes 2 versehen ist.

Die Kabelplatte 7 ist einstückig als Doppelplatte gestaltet und mit Einsteckstutzen 10 ausgerüstet, in die als gesonderte Bauteile Kabeleinlaufstutzen 11 einsteckbar sind. Diese Kabeleinsteckstutzen 11 sind mit Rastlaschen 12 ausgerüstet, die mit ihren Rastenenden 13 in Rastschlitze 14 der Kabelplatte 7 in der Verrastlage eingreifen. Eine solche Verhakungssituation ist beispielsweise im Schnitt in den Fig. 18 bis 21 dargestellt.

Aus den Fig. 15 und 17 ist noch erkennbar, daß die Kabeleinlaufstutzen einen Ansatz 11a aufweisen zur Aufnahme einer Klemm- bzw. Zugentlastungsschelle 15 und eine außen umlaufende Nut 16 aufweisen zur Aufnahme eines O-Dichtringes 17, um eine Dichtung gegenüber den Plattenstutzen 10 an den Kabelplatten 7 zu erreichen, wie sich dies insbesondere auch aus den Fig. 18 bis 21 ergibt.

Wie oben schon angegeben, sind die Ein- und Auslaufbereiche 3 bzw. 3a und der Topfboden 4a über Schnellverschlüsse 5 mit dem Kunststoffrohrstück 2 verbindbar, wobei die Wirkungsweise sich beispielsweise aus den Fig. 6 bis 9 ergibt.

Die zur Verbindung eingesetzten Rastelemente 5 weisen einen Schnapphaken an einer Federlasche 19 auf, die an der Oberfläche des Mantelbereiches 2 befestigt ist und die Tendenz hat, den Schnapphaken 18 radial nach außen zu bewegen, wie dies in Fig. 6, linke Figurenhälfte, dargestellt sein soll. Übergriffen wird dabei die Federlasche 19 von einem Schieber 20, der aus der in Fig. 6 linken Figurenhälfte dargestellten Öffnungsstellung in die in der rechten Figurenhälfte dargestellte Schließstellung verschiebbar ist und dabei den Schnapphaken 18 radial nach innen bewegt. Bei dieser radial nach innen gerichteten Bewegung übergreift eine Rastnut 21 einen Randkantenbereich 22 an den Kabelplatten 7 und verrastet so das entsprechende Element am zylindrischen Mantelbereich bzw. Kunststoffrohrstück 2.

In Fig. 9 ist in Explosionsdarstellung im unteren Bereich der Figur dargestellt, daß unterschiedliche Kabeleinlaufstutzen an der entsprechenden Kabelplatte verrastbar sind, wobei mit 11' zwei Varianten eines ovalen Einlaufbereiches dargestellt sind, die mit einer Einführung für ein Einzel- oder ein Doppelkabel ausrüstbar sind.

Diese beiden unterschiedlichen Varianten der Kabeleinlaufstutzen 11' sind auch in den Fig. 11 und 12 bzw. einer Alternative in Fig. 10 dargestellt, eine abweichende Konfiguration vom Kabeleinlaufstutzen zeigt die Fig. 13 in Verbindung mit Fig. 14.

Wie sich aus den Figuren ergibt, sind die Kabeleinlaufstutzen mit geschlossenen, kegelstumpf- oder pyramidenstumpfförmigen, nach außen weisenden Dichtstutzen 23 versehen. Je nach Durchmesser des einlaufenden Kabels, s. insbesondere Fig. 18 bis 21, werden die Dichtstutzen, die eine treppenförmige Konfiguration aufweisen können, an unterschiedlichen Stellen aufgetrennt, wobei der verbleibende Innendurchmesser geringfügig kleiner ist als der Außendurchmesser des in den Figuren allgemein mit 24 bezeichneten Kabels. Zum Einführen dieses Kabels 24 in einen solchen geöffneten Kabeleinlaufkegel wird dieser mit einem nicht dargestellten Werkzeug aufgeweitet, das Kabel eingeführt, wobei das Kunststoffmaterial eines solchen Einlaufkegels 23 ein Rückstellverhalten hat, derart, daß es versucht, sich in seinen Ausgangsdurchmesser wieder zurückzuverformen, so daß es zur dichtenden Anlage am Mantel des Kabels 24 kommt, wie dies z.B. aus Fig. 15 bzw. aus den Fig. 18 bis 21 hervorgeht.

In Fig. 18 ist die paarweise Einführung eines Kabels mit 16 mm Durchmesser und 25 mm Durchmesser, in Fig. 19 mit 11,5 mm und 20,5 mm, in Fig. 20 mit 6 mm und 12 mm und in Fig. 21 mit 11 mm und 20 mm dargestellt, ohne daß die Erfindung auf die hier dargestellten Beispiele beschränkt wäre. Die Figuren zeigen, daß mit gleichen Bausatzelementen unterschiedliche Kabeleinführungen möglich gemacht werden.

In den Fig. 22 bis 24 ist dargestellt, wie eine Kabelschleife 24a über einen Einlaufbereich 3 in das zylindrische, glatte Kunststoffrohrstück 2 einführbar ist, wobei die einzelnen Schritte einer solchen Einführung den Fig. 25 bis 28 zu entnehmen sind. Aus Darstellungsgründen ist in den dortigen Figuren an einer Kabelplatte 7 nur ein ovaler Stutzen 10 zur Aufnahme eines Kabeleinlaufstutzens 11' vorgesehen, wobei die Kabelschleife von die Zugentlastung und Fixierung ermöglichenden Klemmstücken 25 bzw. 26 beaufschlagt ist.

Wie sich aus den Fig. 25 bis 28 ergibt, wird die Kabelschleife 24a gebildet, der Kabeleinlaufstutzen 11' übergeschoben, die Klemmstücke 25 und 26 positioniert (Fig. 25), der Stutzen 11' übergeschoben (Fig. 27) und die Kabelschlaufe in die Kabelplatte 7 eingeschoben und mittels Kabeleinlaufstutzen 11' fixiert (Fig. 28).

Insbesondere aus den Fig. 25 bis 28 ergibt sich auch, daß jede Kabelplatte 7 bzw. jeder Kabelein- und -auslaufbereich 3 mit einem Aufnahmedorn 27 zur Montage an einer Mast- oder Wandhalterung ausgerüstet sein kann.

In den Fig. 29 und 30 ist die Möglichkeit dargestellt, eine Kabelplatte 7a mit einer Einrichtung 28 zur Aufnahme einer Glasfaserkassette 29 zu versehen. In ähnlicher Weise können Aufnahmeelemente zur Belegung mit einer Verbindungsschiene vorgesehen sein, was in den Figuren nicht näher dargestellt ist.

Schließlich ist in den Fig. 31 und 32 eine andere Art der Zugentlastung dargestellt. Hier weist der Kabeleinlaufstutzen 11 eine in Kabelzugrichtung (Pfeil 30) sich verjüngende, gestufte Innenwandkonfiguration 31 auf, die von einem gezahnten, doppelteiligen Klemmelement 32 beaufschlagt wird, derart, daß sich bei Ausübung eines Kabelzuges in Pfeilrichtung 30 das Klemmelement 32 an der Kabeloberfläche anlegt und sich bei erhöhtem Zug im Innendurchmesser verjüngt, so daß ggf. vorgesehene Raststege 33 sich klemmend am Kabelmantel anlegen.

## Patentansprüche

1. Bausatz (1) zur Erzeugung einer Muffe für die Verteilernetze der Telekommunikation od. dgl. mit einem Ein- und/oder Auslaufbereich (3) für Kabel, einem zylindrischen Mantelbereich (2) zur Aufnahme der Kabelanschlüsse, -verzweiger, -spleiße od. dgl. und einem Topfboden (4) und/oder Auslauf- bzw. Einlaufbereich (3a),
dadurch gekennzeichnet,
daß der zylindrische Mantelbereich (2) von einem im Innenraum glatten, zylindrischen Rohrstück, insbesondere aus Kunststoff, mit Befestigungselementen (5) zur lösbaren Verbindung des Ein- bzw. Auslaufbereiches (3) oder des Topfbodens (4) gebildet ist, wobei Ein-/Auslaufbereiche (3) mit Einsteckstutzen (10) für nach außen weisende, vormontierbare Kabeleinlaufstutzen (11) versehen sind.

2. Bausatz nach Anspruch 1,
dadurch gekennzeichnet,
daß die Kabeleinlaufstutzen (11) auswechselbar an den Ein- bzw. Auslaufbereichen befestigt sind.

3. Bausatz nach Anspruch 1 oder 2,
dadurch gekennzeichnet,
daß die Kabeleinlaufstutzen (11) mit Schnapphaken (12) versehen sind, die an den Ein-/ bzw. Auslaufbereichen (3) verrastbar sind.

4. Bausatz nach einem der vorangehenden Ansprüche,
dadurch gekennzeichnet,
daß die Ein-/Auslaufbereiche (3) bzw. der Topfboden (4) mit in das Innere des Kunststoffrohrstückes weisenden Dichtansätzen (6), insbesondere mit Dicht-O-Ringen (8), und mit Ansätzen (22) für die Befestigungselemente (5) am Kunststoffrohrstück (2) versehen sind.

5. Bausatz nach Anspruch 1 oder einem der folgenden,
dadurch gekennzeichnet,
daß die Kabeleinlaufstutzen (11) mit geschlossenen, kegelstumpfförmigen, nach außen weisenden Dichtstutzen (23) versehen sind, die in der Einlauflage des Kabels (24) in einem dem jeweiligen Außendurchmesser des Kabels (24) angepaßten Bereich abtrennbar sind.

6. Bausatz nach Anspruch 5,
dadurch gekennzeichnet,
daß die Kabeleinlaufkegel (23) aus einem aufweitbaren und in seine Ursprungslage zurückkehrbaren Kunststoff gebildet sind.

7. Bausatz nach Anspruch 6,
dadurch gekennzeichnet,
daß die Kabeleinlaufstutzen (11) mit den Kabeleinlaufkegeln (23) zur Erzeugung eines Formgedächtnisses aus Zwei-Komponenten-Kunststoff und/oder die Kabeleinlaufkegel (23) aus chemisch/physikalisch vernetztem Material bestehen.

8. Bausatz nach Anspruch 1 oder einem der folgenden,
dadurch gekennzeichnet,
daß die Befestigungselemente am glatten Kunststoffrohrstück als Außenringe am Ein- und Auslaufbereich bzw. Topfboden übergreifende, federnde Schnapphaken (18) ausgebildet sind.

9. Bausatz nach Anspruch 8,
dadurch gekennzeichnet,
daß die Schnapphaken (18) der Befestigungselemente über axial verschiebbare Gleitstücke (20) in die Verrastlage und über einstückig angeformte Federlaschen (19) in die Entrastlage verschwenkbar sind.

10. Bausatz nach Anspruch 1 oder einem der folgenden,
dadurch gekennzeichnet,
daß wenigstens die Kabeleinlaufkegel (11) axial geteilt ausgebildet sind.

11. Bausatz nach Anspruch 1 oder einem der folgenden,
dadurch gekennzeichnet,
daß die Ein- bzw. Auslaufbereiche (3) (Kabelplatten (7)) mit Aufnahmeelementen zur Belegung mit einer Verbindungsschiene (Erdung) und/oder mit Einrichtungen (28) zur Aufnahme von Glasfaserkassetten versehen sind.

12. Bausatz nach Anspruch 1 oder einem der folgenden,
dadurch gekennzeichnet,
daß die Ein- bzw. Auslaufbereiche (Kabelplatten (7)) mit einem Aufnahmedorn (27) zur steckbaren oder drehbaren Befestigung einer Mast- bzw. Wandhalterung versehen sind.

13. Bausatz nach Anspruch 1 oder einem der folgenden,
dadurch gekennzeichnet,
daß das den Muffenkörper bildende Kunststoffrohrstück (2), die die Ein- und Auslaufbereiche (3) bildenden Kabelplatten (7) sowie die Kabeleinlaufkegel (11) aus gleichen oder unterschiedlichen Kunststoffmaterialien und/oder aus Mischwerkstoffen gebildet sind.

14. Bausatz nach Anspruch 1 oder einem der folgenden,
dadurch gekennzeichnet,
daß die Kabeleinlaufstutzen (11) eine in Kabelauszugrichtung (Pfeil 30) sich verjüngende, gestufte Innenwandkonfiguration (31) aufweist, die von einem gezahnten, doppelteiligen, sich an der Kabelaußenwand in der Gebrauchslage anlegenden Klemmelement (32) beaufschlagt wird.
